# EUROPEAN PATENT SPECIFICATION

(11) **EP 3 264 308 B1**
(45) Date of publication and mention of the grant of the patent: **24.11.2021**
(21) Application number: 17166716.5
(22) Date of filing: 14.04.2017
(51) Int. Cl.: G06F 21/32, G06K 9/00, G06K 9/36

(54) **METHOD AND DEVICE FOR FINGERPRINT VERIFICATION**
VERFAHREN UND VORRICHTUNG ZUR FINGERABDRUCKVERIFIZIERUNG
PROCÉDÉ ET DISPOSITIF DE VÉRIFICATION D'EMPREINTES DIGITALES

(30) Priority: 27.06.2016 WO PCT/CN2016/087275
(43) Date of publication of application: 03.01.2018
(73) Proprietor: Beijing Xiaomi Mobile Software Co., Ltd., Beijing 100085 (CN)
(72) Inventor: JI, Chuanshun, BEIJING, 100085 (CN); JIANG, Zhongsheng, BEIJING, 100085 (CN); WO, Tianyuan, BEIJING, 100085 (CN)
(74) Representative: Cabinet Beau de Loménie

(56) References cited:
- EP-A1- 2 848 196
- WO-A1-2004/057523
- US-A1- 2015 074 418
- US-A1- 2015 086 090
- US-A1- 2015 146 945

## Description

### TECHNICAL FIELD

The present disclosure generally relates to the field of computer technology, and more particularly, to a method and device for fingerprint verification.

### BACKGROUND

An entity key (physical button) of certain terminals provides with a fingerprint verification component, and each terminal can perform fingerprint verification with respect to a user while the user is pressing the entity key.

Before the fingerprint verification, the terminal collects a fingerprint of a finger through the fingerprint verification component, and uses the collected fingerprint as a reference fingerprint. During the fingerprint verification, the terminal collects a fingerprint to be matched of the user through the fingerprint verification component; detects whether the fingerprint and the reference fingerprint are the same; and if the fingerprint and the reference fingerprint are the same, determines that the verification is successful. Document US 2015/074418 A1 discloses an electronic device configured to recognize biometric data of a user and to present to the user information related to an input error of the biometric data.

Document US 2015/086090 A1 discloses a method for performing user authentication by using a fingerprint in an electronic device. The method includes obtaining fingerprint image and fingerprint position information corresponding to an area of the user's finger, comparing the fingerprint image obtained by using fingerprint position information with a pre-registered fingerprint image corresponding to the position of the area to thereby perform the user authentication, and pairing the fingerprint image corresponding to the area of the user's finger with the fingerprint position information to be thereby stored in the memory.

Document WO 2004/057523 A1 discloses an image input apparatus including an image reading assembly positioned below a placement surface on which an object to be examined is placed, and a sensing circuit for sensing that the object is placed on the placement surface, in accordance with a pressure applied to the placement surface.

### SUMMARY

The present disclosure provides a method and device for fingerprint verification.

According to a first aspect, the invention relates to a method for fingerprint verification according to Claim 1.

In one embodiment, the method further includes:
if the first verification result is a successful verification, using the first verification result as the final verification result of the present fingerprint verification.

In one embodiment, the step of performing the fingerprint verification in the process during which the entity key provided with the fingerprint verification component is pressed to obtain the first verification result includes:
receiving a first interrupt signal generated when a finger of a user touches the entity key provided with the fingerprint verification component;
collecting a first fingerprint of the finger in accordance with the first interrupt signal; and
comparing the first fingerprint with a preset reference fingerprint to obtain the first verification result.

In one embodiment, the step of performing the fingerprint verification in the process during which the entity key is raised to obtain the second verification result includes:
receiving a second interrupt signal generated when a finger of a user releases the entity key;
collecting a second fingerprint of the finger in accordance with the second interrupt signal; and
comparing the second fingerprint with a preset reference fingerprint to obtain the second verification result.

In one embodiment, the method further includes:
receiving a call instruction sent by a third-party program, and performing the step of performing the fingerprint verification in the process during which the entity key provided with the fingerprint verification component is pressed to obtain the first verification result in accordance with the call instruction; and
sending the final verification result to the third-party program.

According to a second aspect, the invention relates to a device for fingerprint verification according to Claim 6.

In one embodiment, the device further includes:
a second determination module configured to, if the first verification result obtained by the first verification module is a successful verification, use the first verification result as the final verification result of the present fingerprint verification.

In one embodiment, the first verification module is further configured to:
receive a first interrupt signal generated when a finger of a user touches the entity key provided with the fingerprint verification component;
collect a first fingerprint of the finger in accordance with the first interrupt signal; and
compare the first fingerprint with a preset reference fingerprint to obtain the first verification result.

In one embodiment, the second verification module is further configured to:
receive a second interrupt signal generated when a finger of a user releases the entity key;
collect a second fingerprint of the finger in accordance with the second interrupt signal; and
compare the second fingerprint with a preset reference fingerprint to obtain the second verification result.

In one embodiment, the device further includes:
an instruction receiving module configured to receive a call instruction sent by a third-party program, and trigger the first verification module to perform the step of performing the fingerprint verification in the process during which the entity key provided with the fingerprint verification component is pressed to obtain the first verification result in accordance with the call instruction; and
a result sending module configured to send the final verification result to the third-party program.

According to a third aspect, the invention relates to a device for fingerprint verification according to Claim 11.

In one particular embodiment, the steps of the method for fingerprint verification are determined by computer program instructions. According to a fourth aspect, the invention is also directed to a computer program for executing the steps of a method for fingerprint verification as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a USB key or a hard disk.

Alternatively, the information medium can be an integrated circuit in which the program is incorporated, the circuit being adapted to execute the method in question or to be used in its execution.

The technical solutions provided by embodiments of the present disclosure have the following advantageous effects.

By performing fingerprint verification in a process during which an entity key provided with a fingerprint verification component is pressed to obtain a first verification result; if the first verification result is a failed verification, performing fingerprint verification in a process during which the entity key is raised to obtain a second verification result; and using the second verification result as a final verification result of present fingerprint verification, the fingerprint verification can be performed twice in a process during which a user performs one pressing operation to the entity key, and thus the problem of the fingerprint deformation due to excessive force during the pressing process or the failed fingerprint verification due to a displacement between the finger and the fingerprint verification component can be solved, and the success rate of the fingerprint verification can be improved.

When the first verification result is a successful verification, the first verification result is used as the final verification result of the present fingerprint verification. At this time, a second fingerprint verification is no longer performed, and thus processing resource to be wasted in performing the second fingerprint verification after a first fingerprint verification is successful can be saved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart showing a method for fingerprint verification according to an exemplary embodiment.
Fig. 2 is a flowchart showing a method for fingerprint verification according to another exemplary embodiment.
Fig. 3 is a diagram showing a time of fingerprint verification according to another exemplary embodiment.
Fig. 4 is a flowchart showing first fingerprint verification according to another exemplary embodiment.
Fig. 5 is a flowchart showing second fingerprint verification according to another exemplary embodiment.
Fig. 6 is a block diagram showing a device for fingerprint verification according to an exemplary embodiment.
Fig. 7 is a block diagram showing a device for fingerprint verification according to an exemplary embodiment.
Fig. 8 is a block diagram showing a device for fingerprint verification according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

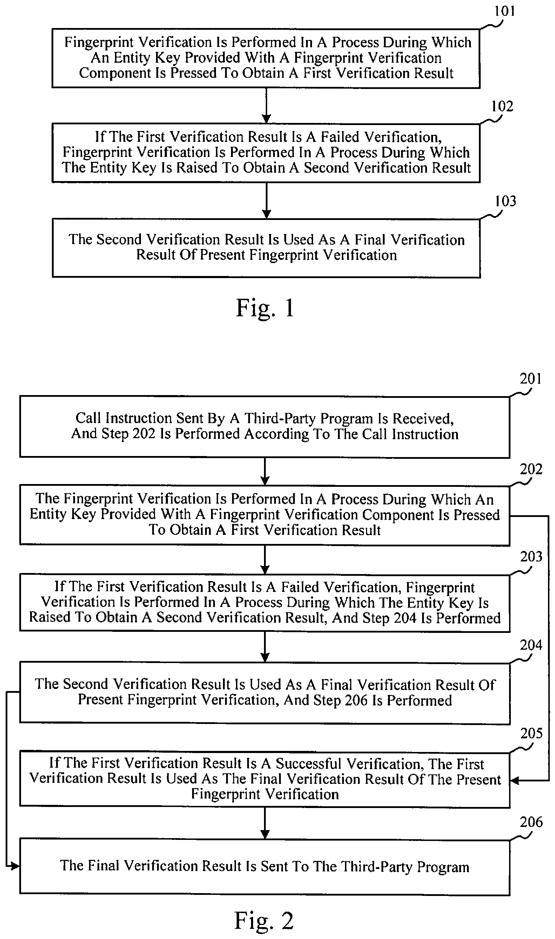

Fig. 1 is a flowchart showing a method for fingerprint verification according to an exemplary embodiment. The method for fingerprint verification is applied in a terminal. As shown in Fig. 1, the method for fingerprint verification includes the following steps.

In step 101, fingerprint verification is performed in a process during which an entity key provided with a fingerprint verification component is pressed to obtain a first verification result.

In step 102, if the first verification result is a failed verification, fingerprint verification is performed in a process during which the entity key is raised to obtain a second verification result.

In step 103, the second verification result is used as a final verification result of present fingerprint verification.

In view of the above, in the method for fingerprint verification provided by the present disclosure, fingerprint verification is performed in a process during which an entity key provided with a fingerprint verification component is pressed to obtain a first verification result; if the first verification result is a failed verification, fingerprint verification is performed in a process during which the entity key is raised to obtain a second verification result; and the second verification result is used as a final verification result of present fingerprint verification. The method can perform the fingerprint verification twice in a process during which a user performs one pressing operation on the entity key, and thus can solve the problem of the fingerprint deformation due to excessive force during the pressing process or the failed fingerprint verification due to a displacement between the finger and the fingerprint verification component, and improve the success rate of the fingerprint verification.

Fig. 2 is a flowchart showing a method for fingerprint verification according to another exemplary embodiment. The method for fingerprint verification is applied in a terminal. As shown in Fig. 2, the method for fingerprint verification includes the following steps.

The method for fingerprint verification provided by the present embodiment is performed by a fingerprint verification component provided in an entity key. The fingerprint verification component includes at least a fingerprint sensor and a processing chip. The fingerprint sensor collects a fingerprint of a finger acted on the entity key (which is a fingerprint to be verified, i.e., a to-be-verified fingerprint), and sends the fingerprint to the processing chip. The processing chip reads a pre-stored reference fingerprint, and compares the fingerprint with the reference fingerprint to obtain a verification result.

The method for fingerprint verification provided by the present embodiment can be applied in any scenario in the terminal, for example, a verification scenario when unlocking the screen, a verification scenario when making payments, a verification scenario when reading encrypted information, a verification scenario when downloading applications, a verification scenario when deleting information, and the like, and the present embodiment is not limited to this. No matter which verification scenario the method for fingerprint verification is applied in, when implemented, a third-party program calls the fingerprint verification component, and the fingerprint verification component performs fingerprint verification and returns the verification result to a third-party application (i.e., the third-party program).

In step 201, a call instruction sent by a third-party program is received, and step 202 is performed according to the call instruction.

When an operation triggered by a user is received and the fingerprint verification needs to be performed with respect to the user is determined according to a preset setting, the third-party program sends the call instruction to the fingerprint verification component provided in the entity key, and the calling instruction is used to instruct the fingerprint verification component to perform verification on the fingerprint of the finger acted on the entity key, that is, the step 202 is performed.

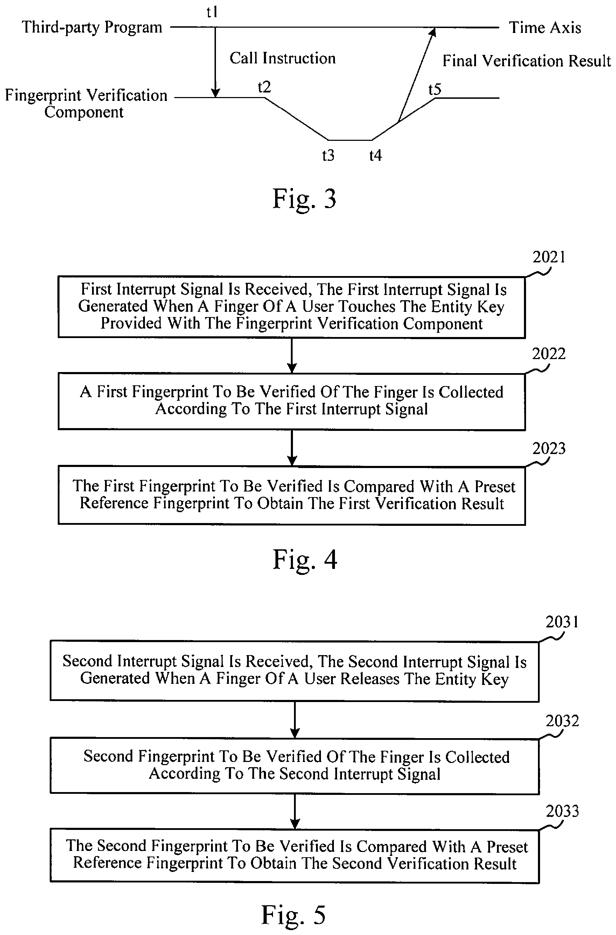

Referring to Fig. 3, the third-party program sends the call instruction to the fingerprint verification component at a time t1.

In step 202, the fingerprint verification is performed in a process during which an entity key provided with a fingerprint verification component is pressed to obtain a first verification result.

Referring to Fig. 4, a process of performing first fingerprint verification by the fingerprint verification component is as follows.

In step 2021, a first interrupt signal is received. The first interrupt signal is generated when a finger of a user touches the entity key provided with the fingerprint verification component.

When the finger of the user touches the entity key, the fingerprint verification component receives the first interrupt signal. In Fig. 3, when a time at which the finger of the user touches the entity key is t2, the fingerprint verification component receives the first interrupt signal at the time t2.

In step 2022, a first fingerprint to be verified (i.e., a first to-be-verified fingerprint) of the finger is collected according to the first interrupt signal.

In step 2023, the first fingerprint to be verified is compared with a preset reference fingerprint to obtain the first verification result.

In general, a time period taken by the fingerprint verification component for performing the fingerprint verification is relatively short, and the fingerprint verification can be done before the user presses the entity key completely. In Fig. 3, when a time at which the user presses the entity key completely is t3, the fingerprint verification component can obtain the first verification result before the time t3.

In step 203, if the first verification result is a failed verification, fingerprint verification is performed in a process during which the entity key is raised to obtain a second verification result, and step 204 is performed.

When the user presses the entity key, if an excessive force is applied, a surface of the finger may be deformed, which may result that the first fingerprint collected by the fingerprint verification component is inaccurate; or, in the process in which the entity key is pressed and then raised, there may be a displacement between the finger and the entity key, which may also result that the first fingerprint collected by the fingerprint verification component is inaccurate. In both cases, the fingerprint verification component compares the first fingerprint to be verified with the reference fingerprint, and the first verification result obtained by the fingerprint verification component is still the failed verification even if the finger pressing the entity key at this time is the finger of which the reference fingerprint is collected. In order to overcome the problem of the failed verification due to inaccurate collection of the first fingerprint to be verified, in the present embodiment, the fingerprint verification component performs a second fingerprint verification in the process in which the entity key is raised to improve the success rate of the fingerprint verification.

Referring to Fig. 5, a process of performing the second fingerprint verification by the fingerprint verification component is as follows.

In step 2031, a second interrupt signal is received. The second interrupt signal is generated when a finger of a user releases the entity key.

When the finger of the user releases the entity key, the fingerprint verification component receives the second interrupt signal. In Fig. 3, when a time at which the finger of the user releases the entity key is t4, the entity key is raised, and the fingerprint verification component receives the second interrupt signal at the time t4.

In step 2032, a second fingerprint to be verified of the finger is collected according to the second interrupt signal.

In step 2033, the second fingerprint to be verified is compared with a preset reference fingerprint to obtain the second verification result.

In general, a time taken by the fingerprint verification component for performing the fingerprint verification is relatively short, and the fingerprint verification can be performed before the entity key returns to a state of not being pressed. In Fig. 3, when a time at which the entity key returns to the state of not being pressed is t5, the fingerprint verification component can obtain the second verification result before the time t5.

In step 204, the second verification result is used as a final verification result of present fingerprint verification, and step 206 is performed.

No matter whether the second verification result is a successful verification or a failed verification, the fingerprint verification component uses the second verification result as the final verification result.

In step 205, if the first verification result is a successful verification, the first verification result is used as the final verification result of the present fingerprint verification.

When the first verification result is the successful verification, there is no need to perform the second fingerprint verification which may waste processing resource. Therefore, the fingerprint verification component can directly use the first verification result as the final verification result.

In step 206, the final verification result is sent to the third-party program.

In Fig. 3, the fingerprint verification component sends the final verification result to the third-party program before the time t5, and the third-party program determines whether the verification is successful in accordance with the final verification result.

When the final verification result is the failed verification, the third-party program can also continue to perform step 201 until the final verification result is the successful verification, or, until the number of calling the fingerprint verification component exceeds a preset threshold.

In view of the above, in the method for fingerprint verification provided by the present disclosure, fingerprint verification is performed in a process during which an entity key provided with a fingerprint verification component is pressed to obtain a first verification result; if the first verification result is a failed verification, fingerprint verification is performed in a process during which the entity key is raised to obtain a second verification result; and the second verification result is used as a final verification result of present fingerprint verification. The method can perform the fingerprint verification twice in a process during which a user performs one pressing operation on the entity key, and thus can solve the problem of the fingerprint deformation due to excessive force during the pressing process or the failed fingerprint verification due to the displacement between the finger and the fingerprint verification component, and improve the success rate of the fingerprint verification.

When the first verification result is the successful verification, the first verification result is used as the final verification result of the present fingerprint verification. At this time, the second fingerprint verification is no longer performed, and thus processing resource to be wasted in performing the second fingerprint verification after the first fingerprint verification is successful can be saved.

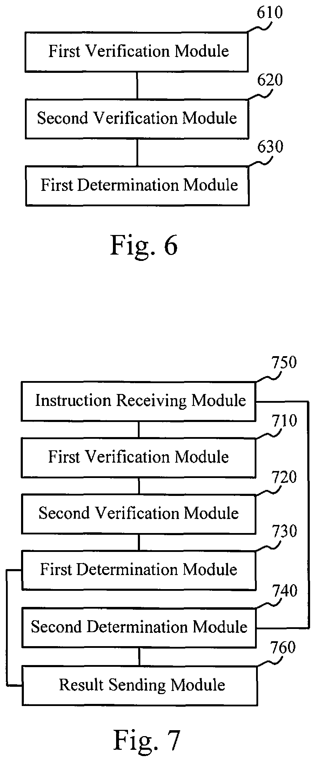

Fig. 6 is a block diagram showing a device for fingerprint verification according to an exemplary embodiment. The device for fingerprint verification is applied in a terminal. As shown in Fig. 6, the device for fingerprint verification includes a first verification module 610, a second verification module 620 and a first determination module 630.

The first verification module 610 is configured to perform fingerprint verification in a process during which an entity key provided with a fingerprint verification component is pressed to obtain a first verification result.

The second verification module 620 is configured to, if the first verification result obtained by the first verification module 610 is a failed verification, perform fingerprint verification in a process during which the entity key is raised to obtain a second verification result.

The first determination module 630 is configured to use the second verification result obtained by the second verification module 620 as a final verification result of present fingerprint verification.

In view of the above, in the method for fingerprint verification provided by the present disclosure, fingerprint verification is performed in a process during which an entity key provided with a fingerprint verification component is pressed to obtain a first verification result; if the first verification result is a failed verification, fingerprint verification is performed in a process during which the entity key is raised to obtain a second verification result; and the second verification result is used as a final verification result of present fingerprint verification. The method can perform the fingerprint verification twice in a process during which a user performs one pressing operation on the entity key, and thus can solve the problem of the fingerprint deformation due to excessive force during the pressing process or the failed fingerprint verification due to the displacement between the finger and the fingerprint verification component, and improve the success rate of the fingerprint verification.

Fig. 7 is a block diagram showing a device for fingerprint verification according to an exemplary embodiment. The device for fingerprint verification is applied in a terminal. As shown in Fig. 7, the device for fingerprint verification includes a first verification module 710, a second verification module 720 and a first determination module 730.

The first verification module 710 is configured to perform fingerprint verification in a process during which an entity key provided with a fingerprint verification component is pressed to obtain a first verification result.

The second verification module 720 is configured to, if the first verification result obtained by the first verification module 710 is a failed verification, perform fingerprint verification in a process during which the entity key is raised to obtain a second verification result.

The first determination module 730 is configured to use the second verification result obtained by the second verification module 720 as a final verification result of present fingerprint verification.

Optionally, the device further includes a second determination module 740.

The second determination module 740 is configured to, if the first verification result obtained by the first verification module 710 is a successful verification, use the first verification result as the final verification result of the present fingerprint verification.

Optionally, the first verification module 710 is further configured to:
receive a first interrupt signal generated when a finger of a user touches the entity key provided with the fingerprint verification component;
collect a first fingerprint of the finger according to the first interrupt signal; and
compare the first fingerprint with a preset reference fingerprint to obtain the first verification result.

Optionally, the second verification module 720 is further configured to:
receive a second interrupt signal generated when a finger of a user releases the entity key;
collect a second fingerprint of the finger according to the second interrupt signal; and
compare the second fingerprint with a preset reference fingerprint to obtain the second verification result.

Optionally, the device further includes an instruction receiving module 750 and a result sending module 760.

The instruction receiving module 750 is configured to receive a call instruction sent by a third-party program, and trigger the first verification module 710 to perform the step of performing the fingerprint verification in the process during which the entity key provided with the fingerprint verification component is pressed to obtain the first verification result according to the call instruction.

The result sending module 760 is configured to send the final verification result to the third-party program.

In view of the above, in the device for fingerprint verification provided by the present disclosure, fingerprint verification is performed in a process during which an entity key provided with a fingerprint verification component is pressed to obtain a first verification result; if the first verification result is a failed verification, fingerprint verification is performed in a process during which the entity key is raised to obtain a second verification result; and the second verification result is used as a final verification result of present fingerprint verification. The method can perform the fingerprint verification twice in a process during which a user performs one pressing operation on the entity key, and thus can solve the problem of the fingerprint deformation due to excessive force during the pressing process or the failed fingerprint verification due to the displacement between the finger and the fingerprint verification component, and improve the success rate of the fingerprint verification.

When the first verification result is the successful verification, the first verification result is used as the final verification result of the present fingerprint verification. At this time, the second fingerprint verification is no longer performed, and thus processing resource to be wasted in performing the second fingerprint verification after the first fingerprint verification is successful can be saved.

With respect to the devices in the above embodiments, the specific manners for performing operations for individual modules therein have been described in detail in the embodiments regarding the methods, which will not be elaborated herein.

An exemplary embodiment of the present disclosure provides a device for fingerprint verification which is able to implement the method for fingerprint verification provided by the present disclosure. The device for fingerprint verification includes a processor; and a memory for storing instructions executable by the processor;
wherein the processor is configured to:
perform fingerprint verification in a process during which an entity key provided with a fingerprint verification component is pressed to obtain a first verification result;
if the first verification result is a failed verification, perform the fingerprint verification in a process during which the entity key is raised to obtain a second verification result; and
use the second verification result as a final verification result of present fingerprint verification.

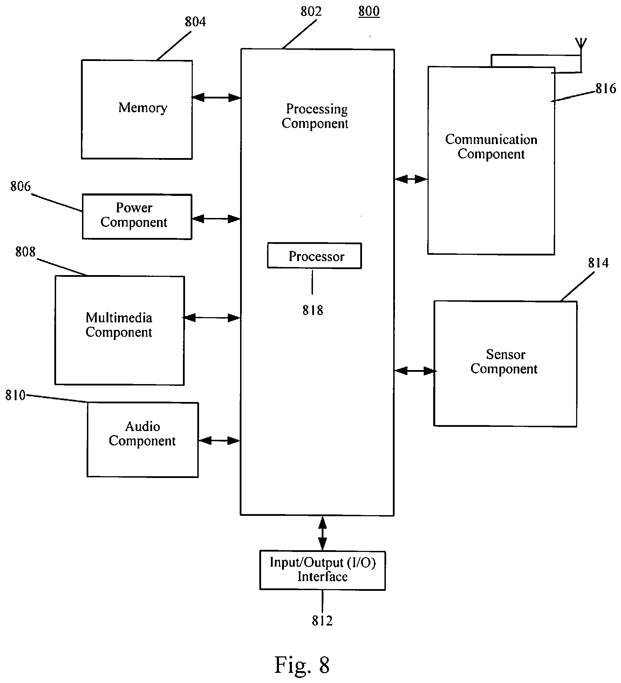

Fig. 8 is a block diagram showing a device 800 for fingerprint verification according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 818 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a calling mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 818 in the device 800, for performing the above-described methods. For example, the non-transitory computer-readable storage medium may be a ROM, a RAM, a CD-ROM, a magnetic tape, a floppy disc, an optical data storage device, and the like.

## Claims

1. A method for fingerprint verification, comprising:
performing (101, 202) a first fingerprint verification in a first process during which an entity key provided with a fingerprint verification component is pressed, when a finger of a user touches the entity key, to obtain a first verification result;
**characterized in that**, the method further comprises:
if the first verification result is a failed verification, performing (102, 203) a second fingerprint verification in a second process during which the entity key is raised, when the finger of the user releases the entity key, to obtain a second verification result; and
using (103, 204) the second verification result as a final verification result of present fingerprint verification;
wherein the first fingerprint verification and the second fingerprint verification are performed in a process during which the user performs one pressing operation to the entity key.

2. The method according to claim 1, wherein the method further comprises:
if the first verification result is a successful verification, using (205) the first verification result as the final verification result of the present fingerprint verification.

3. The method according to claim 1 or 2, wherein the step of performing (101, 202) the first fingerprint verification in the first process during which the entity key provided with the fingerprint verification component is pressed, when the finger of the user touches the entity key, to obtain the first verification result comprises:
receiving (2021) a first interrupt signal generated when the finger of the user touches the entity key provided with the fingerprint verification component;
collecting (2022) a first fingerprint of the finger in accordance with the first interrupt signal; and
comparing (2023) the first fingerprint with a preset reference fingerprint to obtain the first verification result.

4. The method according to any one of claims 1 to 3, wherein the step of performing (102, 203) the second fingerprint verification in the second process during which the entity key is raised, when the finger of the user releases the entity key, to obtain the second verification result comprises:
receiving (2031) a second interrupt signal generated when the finger of the user releases the entity key;
collecting (2032) a second fingerprint of the finger in accordance with the second interrupt signal; and
comparing (2033) the second fingerprint with a preset reference fingerprint to obtain the second verification result.

5. The method according to any one of claims 1-4, wherein the method further comprises:
receiving (201) a call instruction sent by a third-party program, and performing the step of performing the first fingerprint verification in the first process during which the entity key provided with the fingerprint verification component is pressed, when the finger of the user touches the entity key, to obtain the first verification result in accordance with the call instruction; and
sending (206) the final verification result to the third-party program.

6. A device for fingerprint verification, comprising:
a first verification module (610, 710) configured to perform a first fingerprint verification in a first process during which an entity key provided with a fingerprint verification component is pressed to obtain a first verification result, when a finger of a user touches the entity key;
**characterized in that**, the device further comprises:
a second verification module (620, 720) configured to, if the first verification result obtained by the first verification module (610, 710) is a failed verification, perform a second fingerprint verification in a second process during which the entity key is raised to obtain a second verification result, when the finger of the user releases the entity key; and
a first determination module (630, 730) configured to use the second verification result obtained by the second verification module (620, 720) as a final verification result of present fingerprint verification,
wherein the first fingerprint verification and the second fingerprint verification are performed in a process during which the user performs one pressing operation to the entity key.

7. The device according to claim 6, wherein the device further comprises:
a second determination module (740) configured to, if the first verification result obtained by the first verification module (610, 710) is a successful verification, use the first verification result as the final verification result of the present fingerprint verification.

8. The device according to claim 6 or 7, wherein the first verification module (610, 710) is further configured to:
receive (2021) a first interrupt signal generated when the finger of the user touches the entity key provided with the fingerprint verification component;
collect (2022) a first fingerprint of the finger in accordance with the first interrupt signal; and
compare (2023) the first fingerprint with a preset reference fingerprint to obtain the first verification result.

9. The device according to any one of claims 6 to 8, wherein the second verification module (620, 720) is further configured to:
receive (2031) a second interrupt signal generated when the finger of the user releases the entity key;
collect (2032) a second fingerprint of the finger in accordance with the second interrupt signal; and
compare (2033) the second fingerprint with a preset reference fingerprint to obtain the second verification result.

10. The device according to any one of claims 6 to 9, wherein the device further comprises:
an instruction receiving module (750) configured to receive a call instruction sent by a third-party program, and trigger the first verification module (610, 710) to perform the step of performing (101, 202) the first fingerprint verification in the first process during which the entity key provided with the fingerprint verification component is pressed, when the finger of the user touches the entity key, to obtain the first verification result in accordance with the call instruction; and
a result sending module (760) configured to send the final verification result to the third-party program.

11. A device for fingerprint verification according to Claim 6, comprising:
a processor (818); and
a memory (804) for storing instructions executable by the processor (818);
wherein the processor (818) is configured to implement the method of Claim 1.

12. A computer program including instructions for executing the steps of a method for fingerprint verification according to any one of claims 1 to 5 when said program is executed by a computer.

13. A recording medium readable by a computer and having recorded thereon a computer program including instructions for executing the steps of a method for fingerprint verification according to any one of claims 1 to 5.

## Patentansprüche

1. Verfahren zur Fingerabdruckverifizierung, umfassend:
Durchführen (101, 202) einer ersten Fingerabdruckverifizierung in einem ersten Prozess, während dem eine Entitätstaste, die mit einer Fingerabdruckverifizierungskomponente versehen ist, gedrückt wird, wenn ein Finger eines Benutzers die Entitätstaste berührt, um ein erstes Verifizierungsergebnis zu erhalten,
**dadurch gekennzeichnet, dass** das Verfahren ferner umfasst:
wenn das erste Verifizierungsergebnis eine fehlgeschlagene Verifizierung ist, Durchführen (102, 203) einer zweiten Fingerabdruckverifizierung in einem zweiten Prozess, während dem die Entitätstaste angehoben wird, wenn der Finger des Benutzers die Entitätstaste loslässt, um ein zweites Verifizierungsergebnis zu erhalten, und
Verwenden (103, 204) des zweiten Verifizierungsergebnisses als ein endgültiges Verifizierungsergebnis der gegenwärtigen Fingerabdruckverifizierung,
wobei die erste Fingerabdruckverifizierung und die zweite Fingerabdruckverifizierung in einem Prozess durchgeführt werden, während dem der Benutzer einen Drückvorgang auf der Entitätstaste durchführt.

2. Verfahren nach Anspruch 1, wobei das Verfahren ferner umfasst:
wenn das erste Verifizierungsergebnis eine erfolgreiche Verifizierung ist, Verwenden (205) des ersten Verifizierungsergebnisses als das endgültige Verifizierungsergebnis der gegenwärtigen Fingerabdruckverifizierung.

3. Verfahren nach Anspruch 1 oder 2, wobei der Schritt des Durchführens (101, 202) der ersten Fingerabdruckverifizierung in dem ersten Prozess, während dem die Entitätstaste, die mit der Fingerabdruckverifizierungskomponente versehen ist, gedrückt wird, wenn der Finger des Benutzers die Entitätstaste berührt, um das erste Verifizierungsergebnis zu erhalten, umfasst:
Empfangen (2021) eines ersten Unterbrechungssignals, das erzeugt wird, wenn der Finger des Benutzers die mit der Fingerabdruckverifizierungskomponente versehene Entitätstaste berührt,
Erfassen (2022) eines ersten Fingerabdrucks des Fingers gemäß dem ersten Unterbrechungssignal und
Vergleichen (2023) des ersten Fingerabdrucks mit einem voreingestellten Bezugsfingerabdruck, um das erste Verifizierungsergebnis zu erhalten.

4. Verfahren nach einem der Ansprüche 1 bis 3, wobei der Schritt des Durchführens (102, 203) der zweiten Fingerabdruckverifizierung in dem zweiten Prozess, während dem die Entitätstaste angehoben wird, wenn der Finger des Benutzers die Entitätstaste loslässt, um das zweite Verifizierungsergebnis zu erhalten, umfasst:
Empfangen (2031) eines zweiten Unterbrechungssignals, das erzeugt wird, wenn der Finger des Benutzers die Entitätstaste loslässt,
Erfassen (2032) eines zweiten Fingerabdrucks des Fingers gemäß dem zweiten Unterbrechungssignal und
Vergleichen (2033) des zweiten Fingerabdrucks mit einem voreingestellten Bezugsfingerabdruck, um das zweite Verifizierungsergebnis zu erhalten.

5. Verfahren nach einem der Ansprüche 1 bis 4, wobei das Verfahren ferner umfasst:
Empfangen (201) einer durch ein Drittprogramm gesendeten Rufanweisung und Durchführen des Schritts des Durchführens der ersten Fingerabdruckverifizierung in dem ersten Prozess, während dem die mit der Fingerabdruckverifizierungskomponente versehene Entitätstaste gedrückt wird, wenn der Finger des Benutzers die Entitätstaste berührt, um das erste Verifizierungsergebnis gemäß der Rufanweisung zu erhalten, und
Senden (206) des endgültigen Verifizierungsergebnisses an das Drittprogramm.

6. Vorrichtung zur Fingerabdruckverifizierung, umfassend:
ein erstes Verifizierungsmodul (610, 710), das dazu ausgestaltet ist, eine erste Fingerabdruckverifizierung in einem ersten Prozess durchzuführen, während dem eine mit einer Fingerabdruckverifizierungskomponente versehene Entitätstaste gedrückt wird, um ein erstes Verifizierungsergebnis zu erhalten, wenn ein Finger eines Benutzers die Entitätstaste berührt,
**dadurch gekennzeichnet, dass** die Vorrichtung ferner umfasst:
ein zweites Verifizierungsmodul (620, 720), das dazu ausgestaltet ist, wenn das erste Verifizierungsergebnis, das durch das erste Verifizierungsmodul (610, 710) erhalten wird, eine fehlgeschlagene Verifizierung ist, eine zweite Fingerabdruckverifizierung in einem zweiten Prozess durchzuführen, während dem die Entitätstaste angehoben wird, um ein zweites Verifizierungsergebnis zu erhalten, wenn der Finger des Benutzers die Entitätstaste loslässt, und
ein erstes Bestimmungsmodul (630, 730), das dazu ausgestaltet ist, das zweite Verifizierungsergebnis, das durch das zweite Verifizierungsmodul (620, 720) erhalten wird, als ein endgültiges Verifizierungsergebnis der gegenwärtigen Fingerabdruckverifizierung zu verwenden,
wobei die erste Fingerabdruckverifizierung und die zweite Fingerabdruckverifizierung in einem Prozess durchgeführt werden, während dem der Benutzer einen Drückvorgang auf der Entitätstaste durchführt.

7. Vorrichtung nach Anspruch 6, wobei die Vorrichtung ferner umfasst:
ein zweites Bestimmungsmodul (740), das dazu ausgestaltet ist, wenn das erste Verifizierungsergebnis, das durch das erste Verifizierungsmodul (610, 710) erhalten wird, eine erfolgreiche Verifizierung ist, das erste Verifizierungsergebnis als das endgültige Verifizierungsergebnis der gegenwärtigen Fingerabdruckverifizierung zu verwenden.

8. Vorrichtung nach Anspruch 6 oder 7, wobei das erste Verifizierungsmodul (610, 710) ferner ausgestaltet ist zum:
Empfangen (2021) eines ersten Unterbrechungssignals, das erzeugt wird, wenn der Finger des Benutzers die mit der Fingerabdruckverifizierungskomponente versehene Entitätstaste berührt,
Erfassen (2022) eines ersten Fingerabdrucks des Fingers gemäß dem ersten Unterbrechungssignal und
Vergleichen (2023) des ersten Fingerabdrucks mit einem voreingestellten Bezugsfingerabdruck, um das erste Verifizierungsergebnis zu erhalten.

9. Vorrichtung nach einem der Ansprüche 6 bis 8, wobei das zweite Verifizierungsmodul (620, 720) ferner ausgestaltet ist zum:
Empfangen (2031) eines zweiten Unterbrechungssignals, das erzeugt wird, wenn der Finger des Benutzers die Entitätstaste loslässt,
Erfassen (2032) eines zweiten Fingerabdrucks des Fingers gemäß dem zweiten Unterbrechungssignal und
Vergleichen (2033) des zweiten Fingerabdrucks mit einem voreingestellten Bezugsfingerabdruck, um das zweite Verifizierungsergebnis zu erhalten.

10. Vorrichtung nach einem der Ansprüche 6 bis 9, wobei die Vorrichtung ferner umfasst:
ein Anweisungsempfangsmodul (750), das dazu ausgestaltet ist, eine durch ein Drittprogramm gesendete Rufanweisung zu empfangen und das erste Verifizierungsmodul (610, 710) auszulösen, um den Schritt des Durchführens (101, 202) der ersten Fingerabdruckverifizierung in dem ersten Prozess durchzuführen, während dem die mit der Fingerabdruckverifizierungskomponente versehene Entitätstaste gedrückt wird, wenn der Finger des Benutzers die Entitätstaste berührt, um das erste Verifizierungsergebnis gemäß der Rufanweisung zu erhalten, und
ein Ergebnissendemodul (760), das dazu ausgestaltet ist, das endgültige Verifizierungsergebnis an das Drittprogramm zu senden.

11. Vorrichtung zur Fingerabdruckverifizierung nach Anspruch 6, umfassend:
einen Prozessor (818) und
einen Speicher (804) zum Speichern von durch den Prozessor (818) ausführbaren Anweisungen,
wobei der Prozessor (818) dazu ausgestaltet ist, das Verfahren nach Anspruch 1 zu implementieren.

12. Computerprogramm, das Anweisungen zum Ausführen der Schritte eines Verfahrens zur Fingerabdruckverifizierung nach einem der Ansprüche 1 bis 5 beinhaltet, wenn das Programm von einem Computer ausgeführt wird.

13. Aufzeichnungsmedium, das durch einen Computer lesbar ist und darauf aufgezeichnet ein Computerprogramm aufweist, das Anweisungen zum Ausführen der Schritte eines Verfahrens zur Fingerabdruckverifizierung nach einem der Ansprüche 1 bis 5 beinhaltet.

## Revendications

1. Procédé de vérification d'empreintes digitales, comprenant :
la réalisation (101, 202) d'une première vérification d'empreintes digitales dans un premier processus au cours duquel une touche d'entité pourvue d'un composant de vérification d'empreintes digitales est pressée, lorsqu'un doigt d'un utilisateur touche la touche d'entité, afin d'obtenir un premier résultat de vérification ;
**caractérisé en ce que**, le procédé comprend en outre :
si le premier résultat de vérification est une vérification échouée, la réalisation (102, 203) d'une deuxième vérification d'empreintes digitales dans un deuxième processus au cours duquel la touche d'entité est levée, lorsque le doigt de l'utilisateur libère la touche d'entité, afin d'obtenir un deuxième résultat de vérification ; et
l'utilisation (103, 204) du deuxième résultat de vérification comme un résultat de vérification final d'une vérification d'empreintes digitales actuelle ;
dans lequel la première vérification d'empreintes digitales et la deuxième vérification d'empreintes digitales sont réalisées dans un processus au cours duquel l'utilisateur réalise une opération de pression sur la touche d'entité.

2. Procédé selon la revendication 1, dans lequel le procédé comprend en outre :
si le premier résultat de vérification est une vérification réussie, l'utilisation (205) du premier résultat de vérification comme résultat de vérification final de la vérification d'empreintes digitales actuelle.

3. Procédé selon la revendication 1 ou 2, dans lequel l'étape consistant à réaliser (101, 202) la première vérification d'empreintes digitales dans le premier processus au cours duquel la touche d'entité pourvue du composant de vérification d'empreintes digitales est pressée, lorsque le doigt de l'utilisateur touche la touche d'entité, afin d'obtenir le premier résultat de vérification, comprend :
la réception (2021) d'un premier signal d'interruption généré lorsque le doigt de l'utilisateur touche la touche d'entité pourvue du composant de vérification d'empreintes digitales ;
la collecte (2022) d'une première empreinte digitale du doigt en fonction du premier signal d'interruption ; et
la comparaison (2023) de la première empreinte digitale avec une empreinte digitale de référence prédéfinie afin d'obtenir le premier résultat de vérification.

4. Procédé selon l'une quelconque des revendications 1 à 3, dans lequel l'étape consistant à réaliser (102, 203) la deuxième vérification d'empreintes digitales dans le deuxième processus au cours duquel la touche d'entité est levée, lorsque le doigt de l'utilisateur libère la touche d'entité, afin d'obtenir le deuxième résultat de vérification, comprend :
la réception (2031) d'un deuxième signal d'interruption généré lorsque le doigt de l'utilisateur libère la touche d'entité ;
la collecte (2032) d'une deuxième empreinte digitale du doigt en fonction du deuxième signal d'interruption ; et
la comparaison (2033) de la deuxième empreinte digitale avec une empreinte digitale de référence prédéfinie afin d'obtenir le deuxième résultat de vérification.

5. Procédé selon l'une quelconque des revendications 1 à 4, dans lequel le procédé comprend en outre :
la réception (201) d'une instruction d'appel envoyée par un programme tiers, et la réalisation de l'étape consistant à réaliser la première vérification d'empreintes digitales dans le premier processus au cours duquel la touche d'entité pourvue du composant de vérification d'empreintes digitales est pressée, lorsque le doigt de l'utilisateur touche la touche d'entité, afin d'obtenir le premier résultat de vérification en fonction de l'instruction d'appel ; et
l'envoi (206) du résultat de vérification final au programme tiers.

6. Dispositif de vérification d'empreintes digitales, comprenant :
un premier module de vérification (610, 710) configuré pour effectuer une première vérification d'empreintes digitales dans un premier processus au cours duquel une touche d'entité pourvue d'un composant de vérification d'empreintes digitales est pressée afin d'obtenir un premier résultat de vérification, lorsqu'un doigt d'un utilisateur touche la touche d'entité ;
**caractérisé en ce que**, le dispositif comprend en outre :
un deuxième module de vérification (620, 720) configuré pour, si le premier résultat de vérification obtenu par le premier module de vérification (610, 710) est une vérification échouée, réaliser une deuxième vérification d'empreintes digitales dans un deuxième processus au cours duquel la touche d'entité est levée afin d'obtenir un deuxième résultat de vérification, lorsque le doigt de l'utilisateur libère la touche d'entité ; et
un premier module de détermination (630, 730) configuré pour utiliser le deuxième résultat de vérification obtenu par le deuxième module de vérification (620, 720) comme un résultat de vérification final d'une vérification d'empreintes digitales actuelle,
dans lequel la première vérification d'empreintes digitales et la deuxième vérification d'empreintes digitales sont réalisées dans un processus au cours duquel l'utilisateur réalise une opération de pression sur la touche d'entité.

7. Dispositif selon la revendication 6, dans lequel le dispositif comprend en outre :
un deuxième module de détermination (740) configuré pour, si le premier résultat de vérification obtenu par le premier module de vérification (610, 710) est une vérification réussie, utiliser le premier résultat de vérification comme résultat de vérification final de la vérification d'empreintes digitales actuelle.

8. Dispositif selon la revendication 6 ou 7, dans lequel le premier module de vérification (610, 710) est en outre configuré pour :
recevoir (2021) un premier signal d'interruption généré lorsque le doigt de l'utilisateur touche la touche d'entité pourvue du composant de vérification d'empreintes digitales ;
collecter (2022) une première empreinte digitale du doigt en fonction du premier signal d'interruption ; et
comparer (2023) la première empreinte digitale avec une empreinte digitale de référence prédéfinie afin d'obtenir le premier résultat de vérification.

9. Dispositif selon l'une quelconque des revendications 6 à 8, dans lequel le deuxième module de vérification (620, 720) est en outre configuré pour :
recevoir (2031) un deuxième signal d'interruption généré lorsque le doigt de l'utilisateur libère la touche d'entité ;
collecter (2032) une deuxième empreinte digitale du doigt en fonction du deuxième signal d'interruption ; et
comparer (2033) la deuxième empreinte digitale avec une empreinte digitale de référence prédéfinie afin d'obtenir le deuxième résultat de vérification.

10. Dispositif selon l'une quelconque des revendications 6 à 9, dans lequel le dispositif comprend en outre :
un module de réception d'instructions (750) configuré pour recevoir une instruction d'appel envoyée par un programme tiers, et déclencher le premier module de vérification (610, 710) afin de réaliser l'étape consistant à réaliser (101, 202) la première vérification d'empreintes digitales dans le premier processus au cours duquel la touche d'entité pourvue du composant de vérification d'empreintes digitales est pressée, lorsque le doigt de l'utilisateur touche la touche d'entité, afin d'obtenir le premier résultat de vérification en fonction de l'instruction d'appel ; et
un module d'envoi de résultat (760) configuré pour envoyer le résultat de vérification final au programme tiers.

11. Dispositif de vérification d'empreintes digitales selon la revendication 6, comprenant :
un processeur (818) ; et
une mémoire (804) pour stocker des instructions exécutables par le processeur (818) ;
dans lequel le processeur (818) est configuré pour mettre en œuvre le procédé de la revendication 1.

12. Programme informatique comportant des instructions pour exécuter les étapes d'un procédé de vérification d'empreintes digitales selon l'une quelconque des revendications 1 à 5 lorsque ledit programme est exécuté par un ordinateur.

13. Support d'enregistrement lisible par un ordinateur et sur lequel est enregistré un programme informatique comportant des instructions pour exécuter les étapes d'un procédé de vérification d'empreintes digitales selon l'une quelconque des revendications 1 à 5.
